# EUROPEAN PATENT APPLICATION

(11) **EP 0 597 695 A1**
(43) Date of publication of application: **18.05.1994**
(21) Application number: 93308984.9
(22) Date of filing: 10.11.1993
(51) Int. Cl.: A01N 25/34, B65D 65/38

(54) **Compositions for inhibiting microbial growth**

(30) Priority: 13.11.1992 US 976084
(71) Applicant: W.R. GRACE & CO., New York New York 10036 (US)
(72) Inventor: Morgan, Charles Robert, Brookeville, Maryland 21044 (US); Bull, Christopher, Bethesda, Maryland 20814 (US)
(74) Representative: Jones, Helen Marjorie Meredith

(57) **Abstract**

A film that affects the surface pH of an article, thereby inhibiting microbial growth on the surface without direct addition of a foreign substance, is disclosed. The film contains acidic groups bound in an ion-permeable polymer matrix. When the film contacts a moist surface, an acidic environment is created which inhibits microbial growth.

## Description

### Field of the Invention

This invention relates to packaging which inhibits microbial growth. More specifically, it relates to products and methods for retarding spoilage.

### Background of the Invention

There are many known ways of inhibiting microbial growth in general, such as freezing, heating, irradiation, or the application of toxins. A more difficult problem is presented when the idea is to inhibit microbial growth on foods, especially fresh foods such as meat. Radical temperature changes such as freezing and heating produce undesirable changes in flavor and texture. Irradiation is expensive and may be of unproven quality. The application of toxins or preservatives to foods is often inappropriate.

Certain types of acid treatment are known for the preservation of foods. For example, it is known to spray a 2% solution of lactic acid on a carcass to inhibit microbial growth and thus retard spoilage. Use of the lactic acid for entire carcasses is approved by various regulatory agencies, but the acid remains to some extent on the meat, is regarded as a food additive, and is not approved for individual pieces of meat. Some food-approved additives do exist, but none have been approved for fresh meat.

Since the alteration of fresh foods is not particularly acceptable, various approaches have been tried to modify food packaging to extend the shelf life of the foods.

U.S. Patent No. 3,041,184 issued to Hartshorne June 26, 1962 discloses a cellulosic sheet material such as cellophane, butcher's paper, vegetable parchment, cotton or other cloth impregnated with a water-soluble broad spectrum antibiotic. The antibiotics considered in the reference include polymyxin B, tetracycline, chlortetracycline, oxytetracycline, neomycin and streptomycin. European Patent Application 384,319 by Willholt discloses a cellulose sausage casing dipped in a solution of a synthetic antibiotic, nisin, and chelating agent such as sodium EDTA or citric acid. In both of these references the antibiotic is intended to diffuse from the wrapper into the juices of the wrapped meat. This diffusion step, of course, delivers an additive to the meat, which is an undesirable result.

Various other methods have been proposed for making packages or fabrics having antimicrobial properties. For example, U.S. Patent No. 3,864,468 issued to Hyman et al. February 4, 1975 discloses that polymers can be blended with a variety of materials to provide articles having active chemical or physical properties. U.S. Patent No. 4,661,344 issued to Releny, April 28, 1987 discloses that a cation exchange resin can be used to provide slow release of a specific antimicrobial material.

U.S. Patent No. 4,666,706, issued to Farquharson et al. May 19, 1987 discloses a chemical complex of a biocidal agent such as orthophenylphenol and chlorpyrifos and a non-ionic polymer of 2-ethyl oxazoline. The complex is said to be compatible with polyethylene, polypropylene and poly(vinyl)chloride for the purpose of slowly releasing the biocide from a package into the surrounding environment.

U.S. Patent No. 4,888,175, issued to Burton et al. December 19, 1989 discloses 10,10-oxybisphenoxarsine dissolved in a polyethylene or polypropylene film or sheet.

Each of these references relies on the slow release of an antimicrobial agent from a carrier.

Ion exchange materials have been used in certain processes to control microbial populations. U.S. Patent No. 4,199,449, issued to Slejko April 22, 1980, discloses an ion exchange column which physically removes bacteria from an inlet stream. U.S. Patent No. 4,076,622, issued to Costin February 28, 1978, discloses large pore ion exchange resins which contain chemically or physically bound microbiocides for water purification. These compositions trap and kill the microbes in a stream flowing through the resin. Pore size of the resin is important as smaller pore resins and gel resins do not trap the microbes.

Antimicrobial agents have been chemically reacted with a polymeric medium to make a coating for fabric. U.S. Patent No. 4,810,567, issued to Calcaterra et al. March 7, 1989, discloses antimicrobial fabrics which result from graft copolymerization of a functionalized monomer onto a base fabric followed by reaction of the functional group of the graft copolymer with the functional group of an antimicrobial agent (polymyxin) with formation of a covalent bond. U.S. Patents Nos. 4,155,123 and 4,333,183, issued to Popper May 22, 1979 and June 8, 1982 respectively, disclose the treatment of cotton material with a solution of sodium hydroxide and 2-aminoethylsulfuric acid to make an anion exchanger garment useful for controlling human body odors via adsorption.

A useful packaging material for fresh foods would be one that protects the food from spoilage by common microbes without introducing any significant amounts of additives to the food.

### Summary of the Invention

This invention relates to a packaging material for food that retards spoilage. More particularly, it relates to a sheet or film that affects the surface pH of an article, thereby inhibiting microbial growth on the surface, without the addition of harmful foreign substances. The film contains a bound or immobilized acidic substance in a permeable polymeric matrix. When the film touches a moist surface, an acidic environment is created which inhibits the growth of certain common microbes that cause food to spoil.

For many foods, including fresh meat, microbial contamination is largely confined to the surface. This invention targets the surface of the food for microbial inhibition. If a package according to this invention remains in contact with, for example, a piece of meat, the pH will still eventually return to normal. It has been found that, at least in some instances, microbial growth is suppressed long after any noticeable pH effect has dissipated. In another aspect of this invention, packages can be made using this material which have a higher assurance of sterility, at least with respect to pH sensitive micro-organisms, and are therefore less likely to themselves become a source of food contamination.

The packaging material must contain an active substance capable of affecting the surface pH of an article. Since the packaging material is expected to come into effective contact with a food, it is highly desirable that the packaging material contains no harmful extractable substances. Therefore, the active substance must be bound or immobilized, physically or chemically, in a suitable matrix. This matrix must also allow the movement of ions between the food surface and the active substance, thereby permitting the change in pH to occur without actual diffusion of the active substance from the packaging material to the food.

The active substance may be either organic or inorganic. It may function either by exchanging anions or cations. For example, poly(4-vinylpyridine) hydrochloride might serve as an acidic substance either by removing hydroxide ions from food and replacing them with chloride ions (anion exchange) or by removing sodium or potassium ions from food and replacing them with protons (cation exchange). In either case, the pH at the food surface would be lowered.

This application is written in terms of the immediate problem to be solved, i.e., reduction of bacterial populations commonly on the surface of fresh meat, which is most easily accomplished by lowering the surface pH. One of ordinary skill in the art would readily recognize that in another context, a basic ion exchanger might be used to raise the surface pH of an article.

The ion exchangers useful in this invention include those having active groups or precursors to active groups which are or can be bound in a permeable matrix. Acidic exchange materials are preferred. Particularly preferred are sulfonic modified organic polymers and copolymers, (meth)acrylic acid and polyacrylic acid derivatives, and anhydride-containing polymers such as polybutadiene, styrene, and ethylene maleic anhydride copolymers. Inorganic ion exchange materials such as acid-containing clays, green sand, vermiculite and zeolites are also useful, and among these, acid-modified zeolites are preferred.

The ion-exchange material or active substance of this invention need not be an effective ion exchanger before being placed in its useful environment. Rather, it need merely be a precursor to an ion exchanger. For example, certain polybutadiene maleic anhydride copolymers are acidogenic. Upon contact with water, the anhydride hydrolyzes and acquires its acidic character.

The matrix of the present invention may be distinct or indistinct from the ion exchanger. In either case it must bring the ion exchanger into effective contact with the food. Effectiveness of the contact can be demonstrated by a change in the pH of the fluids found at the surface of the food.

In selecting a matrix, it is usually desirable that the matrix be permeable to the ionic constituents of the food and the ion exchangers. Organic polymers which are hydrophilic and swellable in water or in the fluids found on the surface of the article have been found to be particularly effective.

Other considerations include compatibility with the ion exchanger, desirable physical properties, such as temperature resistance, flexibility, and heat sealability. Materials which might serve as a matrix include but are not limited to: cellulose acetate, polybutadiene maleic anhydride copolymers, amino-modified polyethylene and polypropylene glycol polymers and copolymers, polyethylene glycol or polypropylene glycol polymers and copolymers, polyethylene maleic anhydride copolymers, nylons, nylon polyethylene glycol copolymers, acrylic and methacrylic acid polymers and copolymers, ethylene acrylic and methacrylic acid polymers and copolymers and vinyl alcohol polymers or copolymers.

The ion exchange material may be integrally formed with the matrix. For example, Nafion®, a fluorinated-sulfonated polymer from DuPont or polyacrylic acid polymer or copolymer derivatives as well as polybutadiene maleic anhydride copolymers are all materials which contain acid groups or precursor groups in a film-forming matrix.

The matrix may be ion permeable in the classic sense of being swellable in water or a buffered medium; it may be a material that self-orients into channels, such as Nafion®.

Films may be made of the combined ion exchanger and matrix by any of the known methods, including solvent casting, extruding and laminating.

The following examples are provided to illustrate the invention and should not be interpreted as limiting the scope thereof, or the scope of the claims which follow the examples.

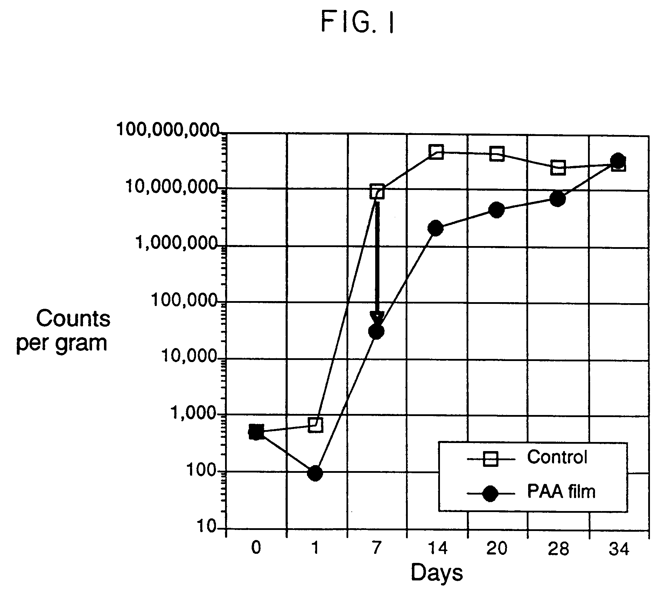

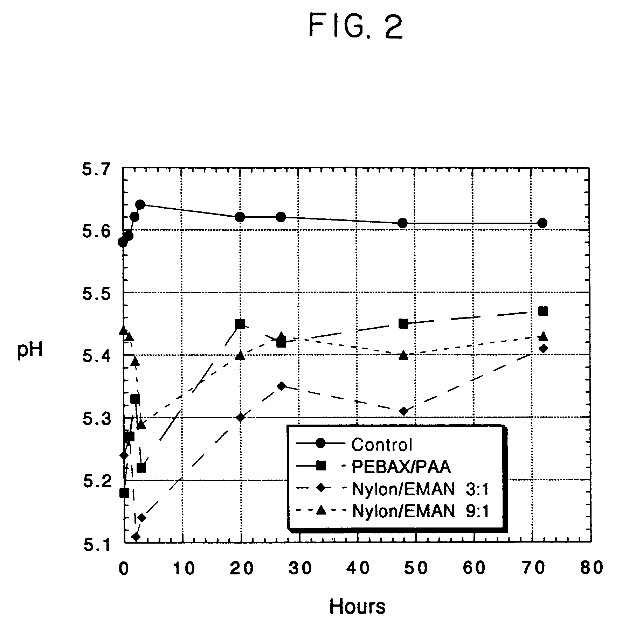

Figure 1 is a graph illustrating the effect of the present invention on bacterial growth on meat. Figure 2 is a graph showing the effect of the present invention on meat surface pH.

### Example 1

### Preparation of Film

Dowex® 50X4-50W (strong acid cation exchange resin) (from Sigma Chemical Company, St. Louis, Mo.) was washed with water, then methanol, dried and ground to a powder (<150 µ). 2 g of this powder were slurried in 6 ml of methyl ethyl ketone and 6 ml of ethanol was added and mixed. Meanwhile, 2 g of cellulose acetate was dissolved in 8 ml of acetone and 4 ml of methyl ethyl ketone, added and mixed. The cellulose acetate solution was combined with the powdered Dowex suspension, mixed briefly, and cast into a film on a Teflon® surface with the aid of a drawbar. The film was loosely covered as it dried over several hours and was then peeled from the surface.

A 50 mg portion of the above film was placed in 2 ml of 0.1M KCl and titrated with 1M KOH. The initial pH was 1.7, and the film was found to contain about 2.1 meq/g of strong acid (pKa <2). For comparison, the original DOWEX® 50X4-50W contained about 5 meq/g acid.

Ion exchange materials often reach equilibrium slowly. In order to ensure the accuracy of pH measurements, the titrations must be performed slowly, often over a period of days. Acid content of the various films was measured in the following manner.

Separate vials are prepared containing a weighed amount (about 100 mg) of shredded sample suspended in 5 ml of 0.1 M. KCl. Different amounts of KOH are added to each vial. The vials are stoppered and stirred. The pH is measured daily over the course of a week until equilibrium is reached. The vials have minimal headspace to avoid interference by atmospheric carbon dioxide. This procedure can be applied to starting materials as well as films. The endpoint of these titrations is dependent on the application desired. For fresh red meat, the endpoint is taken to be a pH of about 5.7, which is the normal pH of the meat surface.

Another measure of the activity of a film is acid delivered per unit area. A known area of film is punched, weighed, shredded and titrated as described above. Results are reported as micromoles "acid delivered" per square centimeter. One of ordinary skill in the art will readily recognize that the term "acid delivered" is merely a shorthand method of referring to the ability of an ion-exchange film to titrate basic equivalents. This is distinct from acid content per se, because the acid content of a film may not be related to the film's ability to affect pH.

### Effect on Surface pH of Meat

The initial pH of a piece of fresh red meat as measured by an 81-35 Ross® combination flat surface pH electrode (from Orion Research, Cambridge, MA.) was 5.7. Upon covering this meat with the above acid film, the surface pH declined to 4.5 and stayed at this pH for several hours. The surface pH rose to 5.0 by the next morning and to 5.2 by 24 hours.

### Antimicrobial Activity on Meat Surfaces

A stock solution of *Pseudomonas fluorescens* was prepared at 10⁶ colony forming units/ml (cfu/ml). Vacuum packed top round was swabbed with 70% ethanol and cut into steaks maintaining sterility as much as practical. 0.1 ml of the *P. fluorescens* stock solution was inoculated and spread onto a 1'' square surface on these steaks using a sterile template. Half of these inoculated surfaces received a 1'' square piece of the acidic film, and the steaks were vacuum bagged and stored at 4°C.

Bacterial survival was determined by excising the 1'' square sections defined by the template. Each was placed in a Stomacher 400™ digester (from Tekmar® Company, Cincinnati, Ohio) along with enough 1% peptone water to make a 1/10 (w/v) dilution of the meat section. The homogenate was further diluted in tenfold serial steps with 1% peptone and each dilution was plated on *Pseudomonas* agar. Plates were counted after incubating two days at 32°C.

This assay procedure was done immediately after inoculating the meat and after 2, 4 and 6 days of storage at 4°C. Control samples of uninoculated meat were also assayed at each time but no *Pseudomonas* were found (<100 cfu/ml). Results for inoculated sections are shown in Table I which showed that recovery of *Pseudomonas* on treated sections of meat was 5 to 20 fold less than on the untreated sections.

**Table I**

| **Effect of Acid Film on** ***Pseudomonas*** **Growth** | | |
|---|---|---|
| Time (Days) | Neutralized Film (cfu/ml) | Acidic Film (cfu/ml) |
| 0 | <100 | <100 |
| 2 | 9700 | 570 |
| 4 | 2700 | 540 |
| 6 | 11,000 | 460 |

### Example 2

### Preparation of Film

Two grams of EVA resin (ethylene-vinyl acetate copolymer having 40% vinyl acetate, Cat. #06107 from Polysciences, Inc., Warrington, PA) was dissolved slowly in 10 ml of chloroform. Meanwhile, two grams of Dowex 50W-X12® (200-400 mesh, Polysciences 04771 which had been washed and dried as in Example 1) were suspended in 5 ml of tetrahydrofuran. If the EVA resin solution began to dry excessively, more chloroform (5-8 ml) was added. The two solutions were mixed and then cast on a Teflon® sheet with the aid of a draw bar with 0.5 mm gap. After slow drying, the film was peeled from the Teflon sheet. KOH titration in 0.1 KCL showed 2.2 meg/g acid content and delivered 31 micromoles acid/cm² as expected for 50% w/w content of ion exchange beads. Similar films containing 18 and 33 weight % Dowex® were prepared. They had an acid content of 0.7 meq/g and delivered about 3 micromoles acid/cm² and 1.3 meq/g and delivered 11 micromoles acid/cm² respectively.

### Antimicrobial Activity on Meat Surfaces

To test for antimicrobial activity, 25 g slices of eye of round were made and thoroughly mixed together under aseptic conditions so that the natural bacterial flora were evenly dispersed on the slices. Test samples were wrapped on all sides with an acid film, similar control samples were left unwrapped and all were vacuum bagged individually in an oxygen barrier material and stored at 4°C.

After the desired storage time, test and control packages were opened individually and the entire contents of the bag including the wrapping were placed in a Tekmar Stomacher® and blended with 9 parts peptone water, according to the manufacturer's directions. The resulting suspension was diluted and plated using standard microbiological techniques. Bacterial counts were made on Tryptcase® soy agar incubated at 7°C for 10 days. Bacterial counts per gram of meat after various intervals were reported.

Assays at days 1, 4 and 7 showed that this film reduced bacterial counts at least tenfold, as shown in Table II.

**Table II**

| **Colony forming units found per gram of meat.** | | | | |
|---|---|---|---|---|
| **Effect of Acid Films on Fresh Red Meat Flora** | | | | |
| **Day** | **Control** | **18%** | **33%** | **50%** |
| Acid Tolerant Organisms (e.g. *Lactobacilli*) | | | | |
| 0 | 3,500 | | | |
| 1 | 4,400 | 2,800 | 2,200 | 500 |
| 4 | 160,000 | 88,000 | 22,000 | 5,800 |
| 7 | 3,200,000 | 600,000 | 240,000 | 81,000 |

| Aerobic Putrefying Organisms (CVT agar) | | | | |
|---|---|---|---|---|
| 0 | <100 | | | |
| 1 | <100 | <100 | <100 | <100 |
| 4 | 4,200 | 880 | 1,500 | 230 |
| 7 | 120,000 | 19,000 | 7,500 | 3,800 |

| Psychotrophs (Cold Tolerant Organisms) | | | | |
|---|---|---|---|---|
| 0 | 3,600 | | | |
| 1 | 6,000 | 2,300 | 2,500 | 900 |
| 4 | 170,000 | 84,000 | 33,000 | 6,100 |
| 7 | 6,500,000 | 1,400,000 | 670,000 | 220,000 |

### Example 3

### Acid Modification of Zeolite

USY® Zeolite (from Davison division of W. R. Grace & Co.-Conn., Baltimore, MD) was slurried in water and the pH adjusted to 3.0 with 5% or 10% sulfuric acid in water. The pH was checked and adjusted periodically over the next week. The solids reclaimed by vacuum filtration, suspended in water and this wash step was repeated several times until the effluent pH was consistently above 4.5.

The solids were vacuum filtered, washed with tetrahydrofuran ("THF") and dried in a moderate temperature vacuum oven, about 60°C. The dried ground solid material delivers 2 meq acid/g upon raising the pH to 5.7 when the titration is performed slowly, i.e., over a period of several days as described in Example 1.

### Film Preparation

Twelve grams of the EVA resin used in Example 2 was dissolved in 50 ml THF and blended with a slurry made of 12 g. of the acid modified zeolite. This mixture was cast into a film and titrated in the same manner as Example 1.

The film was found to contain about 1.0 meq/g of strong acid (pKa <2) which corresponded to 8 micromoles/cm^{2.}

### Example 4

Polyacrylic acid (400,000 mw Cat. #03312 from Polysciences, or "PAA") in the amount of 2.7g was dissolved in 90 ml methanol. Meanwhile, 21.6 g PEBAX 4011® (a block copolymer of nylon and polyethylene glycol Mx1657 from Atochem, Inc., Glen Rock, NJ) was dissolved in 45 ml of 88% formic acid. Since PEBAX 4011 is unstable in formic acid, the solution must be prepared and used daily.

The PAA solution was added slowly with stirring to the PEBAX solution. The PAA container was rinsed with methanol and the wash was added to the PEBAX solution so that the final ratio of formic acid to methanol was one part to three parts, i.e., about 45 ml methanol was added.

The film was cast as in Example 1 except that a polycarbonate sheet was used instead of Teflon®.

The dried film contains residual formic acid, which must be removed. These films were soaked in water for several days and air dried at ambient temperature.

This film contained about 0.7 meq acid per gram, and delivered about 10 micromoles acid per square centimeter.

### Effect of PAA/PEBAX Film on Total Counts

Bacterial growth was assayed as in Example 2 and the results are graphed in Figure 1. The control did not have a film wrapper. Relative to this control, the PAA/PEBAX showed an initial bacteriocidal effect which peaked on day 1, followed by much slower overall growth. The largest difference, which developed about day 7, was over 100-fold. The bacterial population affected by the PAA/PEBAX film did not fully recover for over thirty days. This curve does not necessarily follow the pH titration curve shown in Figure 2. Rather, the effect persisted well after any detectable surface pH difference had dissipated.

The initial pH of the meat was, as usual, 5.7. Upon covering with the film, the surface pH declined to 5.2 in about 15 minutes and stayed between 5.2 and 5.3 for the first few hours. The surface pH rose to 5.5 over the next three days.

### Extractability

Ten samples of the raw PAA/PEBAX film (i.e., solvent cast but *not* washed) averaging .144 ± 0.0040g. were soaked overnight at 4°C in water. The formic acid content, measured directly by high pressure liquid chromatography, was about 5 meq/l and total acidity, measured by titration, was 3 meq/l. It was expected that the difference between total acidity and formic acid content would be attributable to leaching of PAA from the film. However, it was found that slightly more formic acid was measured than total acidity. This figure was within experimental error.

The wash water was evaporated to dryness and the residue weighed. The residue had more weight than could be accounted for by the acid content. This nonacidic residue component is taken to be PEBAX.

From these results it is seen that the loss of PAA from the film must be under 1% and that the film apparently does not function primarily by leaching PAA into the meat.

### Example 5

36 g of 1 to 1 copolymer of ethylene and maleic anhydride ("EMAN") (Cat #02308 from Polysciences) was dissolved in 120 ml THF. Meanwhile 36 g of Nylon-666 Ultramid 35™ (from BASF, Parsipppany, NJ) in 88% formic acid is prepared.

One part EMAN solution was blended with 9 parts Nylon-666 solution. Neither precipitated. This is surprising because neither polymer is soluble in the other polymer's solvent. Further, EMAN does not dissolve in a 50% formic acid/THF solution.

The film was solvent cast on a polycarbonate sheet soaked in water and dried as in Example 4, to produce a clear film with good wet strength. The film was titrated as in Example 1 and found to contain about .7 meq/g of acid and 9 micromoles/cm².

Similarly, 1 part of EMAN solution was blended with 3 parts Nylon solution and solvent cast to make a film. The film was found to contain about 3.3 meq/g of acid and 32 micromoles acid/cm².

### Effect of Acid Films on Meat Surface pH

Steaks were cut from a fresh eye of round, and one inch square pieces of film from Examples 4 and 5 were laid on the upper and lower surfaces. The steaks were placed in display trays and overwrapped loosely with a thin film of PVC and stored in a refrigerated room (4° C).

Periodically the steaks were removed, the films lifted and the surface pH measured with a combination surface pH electrode. The upper and lower surfaces gave similar readings and all readings were averaged to generate the date shown below. The control had no film other than the loose PVC.

The results are graphed in Figure 2 and show that the control sample stayed essentially at the same pH throughout the test, which was terminated at about 72 hours. The PAA/Pebax film showed a rapid initial pH drop, whereas the 9:1 Nylon/EMAN film showed a smaller initial drop than the PAA/Pebax but eventually showed a similar profile. These films had similar acid content (PAA/PEBAX 10 micromoles/cm²; Nylon/EMAN 9:1 had 8 micromoles/cm²).

The 3:1 Nylon/EMAN film, which had a higher acid content (31 micromoles/cm²) gave a correspondingly larger surface pH depression.

These profiles also show that the pH effect fades over time, although this particular test did not proceed to that endpoint.

## Claims

1. A packaging material for perishable goods comprising an immobilized ion exchanger.

2. The packaging material of claim 1 in which the ion exchanger is capable of affecting the pH of materials in contact with the surface of the material.

3. The material of Claim 1 or 2 having a surface layer comprising the ion exchanger and an organic polymer matrix.

4. The material of any preceding claim, wherein the ion exchanger is acidic.

5. The material of any preceding claim, wherein the ion exchanger comprises a sulfonic acid modified organic polymer, preferably sulfonated polystyrene.

6. The material of any of Claims 1 to 4, wherein the ion exchanger contains carboxylic acid, phosphonic acid, or phosphoric acid ester functional groups.

7. The material of any of Claims 1 to 4, wherein the ion exchanger contains anhydride functional groups, preferably carboxylic acid anhydride groups, more preferably derived from maleic anhydride units.

8. The material of any of Claims 1 to 4, wherein the ion exchanger comprises an acidic inorganic material, preferably a zeolite, more preferably an acid form zeolite.

9. The material of Claim 3, wherein the organic polymer is hydrophilic.

10. The material of Claim 3 or Claim 9, wherein the organic polymer is ion permeable in use, and is preferably selected from cellulose acetate, polybutadiene maleic anhydride, amino-modified polyethylene glycol and polypropylene glycol, polyethylene glycol, polypropylene glycol, polyethylene maleic anhydride copolymers, nylons, nylon-polyethylene glycol, vinyl alcohol polymers and copolymers, and acrylic and methacrylic acid polymers and copolymers, including ethylene acrylic acid and ethylenemethacrylic acid copolymers.

11. The material of any preceding claim, wherein the ion - exchanger comprises material which is substantially non-leachable by aqueous liquids.

12. The material of any preceding claim in which the acid delivered by the material is at least 1 micromole/cm² surface area, preferably at least 3 micromole/cm², determined by the test described hereinbefore.

13. The material of a preceding claim in which the ion exchange material is such that 1 g is capable of extracting up to about 13 meq base.

14. The material of any preceding claim which is a film.

15. Use of a packaging material comprising a matrix material and an active substance which affects the pH of a material whose surface the material contacts, to package a perishable article in which the said material surface is brought into contact with a surface of the perishable article so as to change the pH of the perishable article surface in order to inhibit microbial growth on the perishable article surface.

16. Use according Claim 15 in which there is substantially no leaching of material other than exchanged ions from the active substance or from the matrix material into the perishable article.

17. Use according to Claim 15 or Claim 16 in which the pH of the perishable article surface is reduced by contact with the packaging material, preferably by at least 0.1 pH unit, when the pH is measured 15 minutes after contact of the surfaces is initiated.

18. Use according to any of claims 15 to 17 in which the packaging material is a material according to any of claims 1 to 14.

19. A material for packaging perishable goods comprising a flexible film which changes the surface pH of a moist object when placed in a contacting relation with the moist object.

20. The material of Claim 19 comprising an ion exchange material and an ion permeable organic polymer.

21. The material of Claim 19 or 20 which can abstract up to about 13 meq base per gram of material.

22. A method of packaging an article comprising the steps of providing a packaging material having an active substance capable of changing the pH of materials contacted with the packaging material; and contacting a perishable article with the packaging material so as to affect the surface pH of the article.

23. The method of claim 22 in which the pH at the surface of the material is reduced, preferably by at least 0.1 pH unit, measured 15 minutes after contact of the article with the packaging material.

24. The method of claim 22 or 23 in which the material is as defined in any of claims 1 to 14.
